# FASCICULE DE BREVET EUROPEEN

(11) **EP 2 311 548 B1**
(45) Date de publication et mention de la délivrance du brevet: **24.12.2014**
(21) Numéro de dépôt: 10186981.6
(22) Date de dépôt: 08.10.2010
(51) Int. Cl.: B01D 53/86, F23J 15/02

(54) **Procédé de prédiction de l'activité d'un catalyseur, et procédé d'évaporation des fumées correspondant**
Verfahren zur Vorhersage der katalytischen Aktivität und entspechendes Reinigungsverfahren
Method for predicting the activity of a catalyst and corresponding purification method

(30) Priorité: 09.10.2009 FR 0957084
(43) Date de publication de la demande: 20.04.2011
(73) Titulaire: LAB SA, 69007 Lyon (FR)
(72) Inventeur: Siret, Bernard, 69200 Venissieux (FR); Tabaries, Franck, 83190 Ollioules (FR)
(74) Mandataire: Grand, Guillaume

(56) Documents cités:
- EP-A1- 0 262 558
- US-A- 5 341 313
- US-A- 6 120 580
- US-A1- 2005 255 605

## Description

La présente invention concerne un procédé de prédiction de l'activité d'un catalyseur à l'égard d'un polluant ou d'un groupe de polluants, en particulier des dioxines et des furanes. Elle concerne également un procédé d'épuration de fumées, lequel inclut un tel procédé de prédiction.

Dans le domaine industriel, et en particulier celui de la combustion, les fumées à traiter contiennent des oxydes d'azote et aussi de nombreux composés organiques, parmi lesquels les composés aromatiques coplanaires (HAP) et les dioxines et furanes (PCDD/F). Ces émissions doivent être traitées et, parmi tous les procédés existants, la dénitrification sélective catalytique, dite SCR, occupe une place de choix. En effet elle permet à la fois une destruction poussée des oxydes d'azote (plus de 90% de destruction sont possibles), est active sur les composés comme les dioxines (PCDD/F), et possède une grande souplesse d'utilisation.

Dans ce procédé, on utilise un catalyseur, souvent à base d'oxydes de vanadium et de tungstène, dans une plage de températures comprise entre 150°C et 450°C. On fait passer les gaz ou les fumées à traiter sur ce catalyseur après adjonction d'un réactif, qui est souvent de l'ammoniac, mais peut également être de l'urée ou un alcane.

Comme dans tous les procédés catalytiques, le catalyseur a une durée de vie limitée, laquelle est fortement dépendante des conditions passées auxquelles a été exposé le catalyseur. Par exemple des poisons vont réduire rapidement l'activité, et donc la durée de vie utile du catalyseur. Une accumulation de fines poussières, qui vont obstruer les pores du catalyseur, réduit aussi sa durée de vie.

Pour compenser une baisse graduelle et inéluctable de l'activité, on est conduit à augmenter la température d'utilisation, ou bien la quantité de réactif utilisée, ou bien à tolérer des effets secondaires comme une fuite plus importante en réactif, qui n'est plus complètement utilisé. Il arrive toutefois un moment où on ne peut plus procéder à des ajustements des conditions opératoires et où il devient nécessaire de devoir procéder à un remplacement total ou partiel du catalyseur

Il est donc absolument critique de pouvoir savoir, à tout moment, dans quel état se trouve le catalyseur pour anticiper et planifier son remplacement.

Traditionnellement, pour ce faire, on extrait lors d'un arrêt de l'installation un échantillon du catalyseur et on le soumet à des tests en laboratoire, qui permettent de déterminer son activité. Toutefois, le test courant permet de déterminer uniquement l'activité pour les oxydes d'azote, et pas celle du catalyseur pour les composés comme les dioxines et les furanes. Or, la quantité de catalyseur mise en service peut être déterminée, non pas pour le traitement des oxydes d'azote, mais pour la destruction des dioxines. Il n'est pas rare que le volume de catalyseur nécessaire pour le traitement conjoint des oxydes d'azote et des dioxines soit plus du double de celui qui serait nécessaire pour la destruction des oxydes d'azotes seuls.

D'autre part, il n'existe à ce jour aucun test permettant de quantifier directement l'activité d'un catalyseur vis-à-vis des dioxines, principalement parce que ces composés sont trop toxiques pour être manipulés lors de tests industriels. Il est bien sûr possible de se reposer sur les mesures réglementaires qui donnent la concentration en sortie des dioxines et furanes, lesquelles sont pratiquées sur une base au moins annuelle pour les incinérateurs. Cette approche n'est cependant ni globale, ni rapide puisque les délais de réponse entre le moment où est fait le prélèvement et celui où on a la réponse en termes d'émission à la cheminée dépasse souvent quatre semaines.

US-A-5 341 313, qui est considéré comme l'état de la technique le plus proche de l'objet de la revendication 1 annexée, divulgue un procédé de prédiction de l'activité d'un catalyseur à l'égard d'un polluant, ce procédé mettant en oeuvre un modèle semi-empirique pour prévoir la durée de vie du catalyseur.

Ceci étant précisé, l'invention vise à remédier aux inconvénients de l'art antérieur évoqués ci-dessus.

A cet effet, elle a pour objet un procédé de prédiction de l'activité d'un catalyseur à l'égard d'un polluant ou groupes de polluants, tel que défini à la revendication 1 annexée.

D'autres caractéristiques avantageuses de l'invention sont spécifiées aux revendications dépendantes 2 à 6.

L'invention a également pour objet un procédé d'épuration des fumées, tel que défini à la revendication 7.

L'invention vise à associer les mesures effectuées régulièrement à l'aval du catalyseur, le plus souvent à la cheminée des installations industrielles, à des tests d'activité, pratiqués notamment en laboratoire. Puis, par un traitement statistique de l'ensemble de ces données, l'invention vise à prédire le moment où le remplacement du catalyseur, total ou partiel, deviendra nécessaire. Le procédé objet de la présente invention associe donc deux types de données complémentaires, couvrant une plage de temps d'au moins douze mois, et de préférence d'au moins dix-huit mois.

On utilise tout d'abord des données caractérisant les émissions en un polluant ou groupe de polluants, dénommé « cible ». Ce polluant ou groupe de polluants, notamment de type organique, est par exemple formé des dioxines et des furanes, ou bien des HAP (composés aromatiques coplanaires).

A cet effet, on effectue au moins trois mesures de la teneur en ce polluant ou groupe de polluants cible, au sein des fumées ayant traversé le catalyseur, à savoir en aval de ce dernier. Ces mesures s'étendent sur une période de temps d'au moins douze mois, de préférence d'au moins dix-huit mois. Pour plus de clarté, ces mesures seront dénommés « mesures d'émission » ou « résultats d'émission ». Dans une variante de l'invention, explicitée plus en détail dans ce qui suit, on mesure non seulement la teneur en polluant ou groupe de polluants cible, mais également en au moins un polluant ou groupe de polluants supplémentaire.

On utilise, d'autre part, des données associées à des tests d'activité, qui sont en général effectué en laboratoire selon des protocoles connus en soi. Les tests sont relatifs à l'activité du catalyseur à l'égard d'un autre polluant ou groupe de polluants, que le polluant ou groupe de polluants cible.

Ces tests d'activité sont par exemple les tests d'activité du catalyseur vis à vis de la destruction des oxydes d'azote, mais peuvent également être d'autres tests évaluant l'activité du catalyseur vis-à-vis d'autres molécules organiques, dont on peut penser qu'elles seront des traceurs. En d'autres termes, si l'activité du catalyseur diminue pour ces molécules, l'activité va aussi diminuer pour les dioxines et furanes (PCDD/F).

L'activité d'un catalyseur peut décroître par blocage de pores ou par empoisonnement de sites pour ne mentionner que deux phénomènes. Ainsi, un des fondements de l'invention est de supposer qu'une perte d'activité sur un polluant ou un composé se traduira aussi par une perte d'activité sur un autre composé, même si ce n'est pas systématique. Aussi, de manière avantageuse mais pas obligatoire, on disposera du résultat de tests d'activité sur plus d'un polluant. Par exemple on pourra disposer du résultat de tests d'activité pour les oxydes d'azotes, mais également pour un substitut des dioxines.

De manière non limitative on peut utiliser, en tant que tests d'activité sur des substituts de dioxines, des molécules comme le phénol, l'o-chlorophénol, l'o-dichlorobenzène ou les composés benzéniques polychlorés. Ces tests sont connus en tant que tels et on peut en trouver un exemple dans "Catalytic conversions of polychlorinated benzenes and dioxins with low chlorine using V2O5/TiO2 Catal Letter (2008) 120 :294-298 Jung Eun Lee & Jongsoo Jurng". Pour la clarté de la compréhension nous appellerons l'ensemble de ces résultats, « résultat des tests d'activité ».

A partir de ce résultat des tests d'activité on va construire, par un procédé statistique connu en soi, un index composite, ou score, qui résume par un nombre unique l'ensemble des tests d'activités, faits à un moment donné. Pour le cas trivial où les tests d'activité ne concernent qu'une seule molécule, par exemple pour le cas où les tests d'activité sont réalisés uniquement pour les oxydes d'azote ou pour une autre molécule substitut des dioxines, cet index est confondu avec le résultat du test.

En revanche, pour le cas où on teste l'activité du catalyseur sur plus d'une molécule, on peut utiliser des techniques comme l'analyse factorielle ou l'analyse en composantes principales, et retenir comme index composite le score obtenu sur le premier facteur extrait par l'analyse statistique. Ces techniques d'extraction sont connues en elles-mêmes et peuvent être mises en oeuvre en utilisant des logiciels de statistiques du commerce. On peut se représenter cet index composite comme un nombre unique représentatif, pour chaque test, de l'activité globale du catalyseur vis-à-vis de toutes les molécules avec lesquelles on a fait le test considéré et, par extension, de l'activité globale du catalyseur.

En d'autres termes, les tests d'activité du catalyseur peuvent être typiquement matérialisés par une matrice à n lignes et m colonnes, où n correspond au nombre de tests effectués et m correspond au nombre de polluants ou groupes de polluants testés. Dans ces conditions, l'étape consistant à résumer ces tests revient à transformer cette matrice (n, m) en une matrice (n, 1), à savoir une matrice dont le nombre de lignes correspond au nombre de tests, mais qui présente une unique colonne.

Les étapes précédentes ont permis de déterminer les variations, en fonction du temps, à la fois de l'index composite et des résultats d'émission. Selon l'invention, on construit ensuite une fonction de corrélation liant les résultats d'émission à l'index composite déterminé à l'étape précédente. Cette fonction de corrélation est établie en utilisant des techniques statistiques connues en soi, par exemple des techniques de régression. Par exemple on peut utiliser une corrélation linéaire (PCDD/F=a*SCORE + b) ou exponentielle (PCDD/F=EXP(a*SCORE+b)), toute loi empirique convenant dans la mesure où elle représente correctement les données. Il est à noter que les moments où sont disponibles les « résultats d'émissions » et les « résultats d'activité » ne coïncident pas nécessairement, et qu'il peut être nécessaire de procéder à des interpolations dans le temps.

On note Ψ la fonction qui lie la teneur en polluants ou groupe de polluants cible effectivement mesurée, à l'index composite ou score : Ψ(index)=PCDD/F (teneur en dioxines mesurée en aval du catalyseur). Dans l'esprit cette fonction va être utilisée comme substitut des mesures de la cible pour prédire, à partir des tests d'activité, ce que seront les émissions de cette cible.

Selon l'invention, on va maintenant extrapoler dans le temps à des fins de prédiction, par des techniques connues en elle mêmes et pouvant être basées sur des techniques de régression, le devenir dans le temps de l'index composite. Puis, en appliquant à ces extrapolations la fonction de corrélation Ψ, on en déduira une évolution probable des émissions de dioxines en aval du catalyseur, et tout particulièrement à la cheminée.

On dispose souvent, en même temps que des valeurs des émissions de dioxines, de la concentration en composés supplémentaires dont la valeur est affectée par l'activité du catalyseur. C'est le cas de certains composés organiques volatils, par exemple. On peut tirer parti de cette information supplémentaire.

Aussi, selon une variante de l'invention, on intègre cette information à l'index composite, ou score. Dans ce cas l'index composite est obtenu en ajoutant, aux « résultats d'activité », les valeurs des concentrations obtenues pour les composés supplémentaires, autres que la cible. A titre d'exemple, si on a déterminé en laboratoire l'activité du catalyseur vis-à-vis des oxydes d'azote et d'un substitut des dioxines, et si on connait la concentration en composés organiques totaux en aval du catalyseur, le score pourra être généré par une technique statistique en utilisant les trois variables suivantes, au sens statistique : activité vis-à-vis des oxydes d'azotes, activité vis-à-vis du substitut de dioxines et concentration en composés organiques. L'index composite est alors obtenu à partir, non seulement des résultats des tests d'activité, mais également des mesures de la teneur en composés supplémentaires, en aval du catalyseur.

Comme dans la variante principale, si toutes les données ne sont pas disponibles aux mêmes moments, on a recours à l'interpolation dans le temps, technique connue en soi. Le reste de la procédure est identique. Il y a lieu de bien comprendre qu'on traite de manière dissymétrique le polluant ou groupe de polluants cible, et les composés supplémentaires dont on mesure la concentration, qui entrent dans le calcul de l'index composite.

### EXEMPLE

L'exemple suivant, donné à titre non limitatif, aide à comprendre l'invention pour le cas où la cible est constituée par les dioxines et furanes. L'installation concernée est un incinérateur de déchets équipé d'un réacteur SCR, qui réduit à la fois les émissions d'oxydes d'azote (NOx) et de dioxines (PCDD/F).

On dispose à cet effet d'un certain nombre de mesures faites sur l'unité, par exemple lors des mesures réglementaires. Dans l'exemple les émissions constatées de dioxines sont résumées dans le tableau suivant. Les résultats d'émission se réduisent dans ce cas à un chiffre par période, la teneur en dioxines et furanes.

| Temps | PCDD/F |
|---|---|
| 700 heures | 0.02 ng/Nm3 TEQ (sec, 11%O2) |
| 8700 h | 0.02 |
| 17600 h | 0.03 |
| 26200 h | 0.04 |

D'autre part, et à des moments qui ne coïncident pas avec les moments des mesures ci-dessus, des tests d'activité sont pratiqués en laboratoire. Ces tests concernent deux composés ; l'un est le phénol, utilisé en tant que traceur des dioxines, et l'autre les oxydes d'azote.

L'activité est indiquée comme étant relative à l'activité de départ, quand le catalyseur est neuf : kNOx représente l'activité relative mesurée pour les oxydes d'azote, et kDiox représente l'activité mesurée pour le phénol.

| Temps | kNOx | kDiox |
|---|---|---|
| 0 h | 1.00 | 1.00 |
| 8000 h | 0.93 | 0.92 |
| 17500 h | 0.86 | 0.81 |
| 21900 h | 0.85 | 0.79 |
| 26200 h | 0.80 | 0.77 |
| 34000 h | 0.72 | 0.76 |

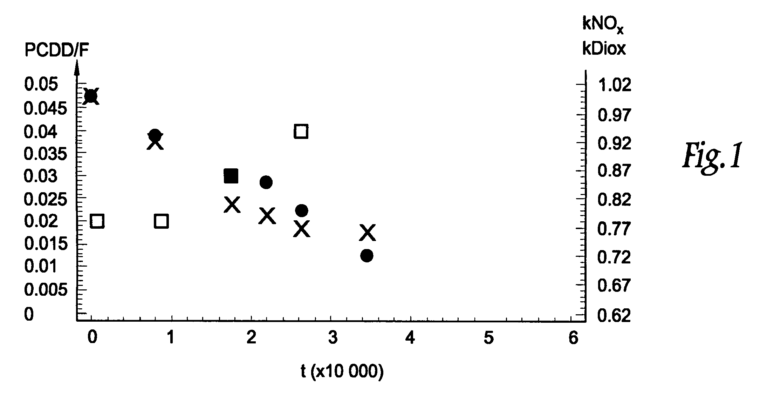

Les données de départ sont représentées sur la figure 1 annexée, où est illustrée l'évolution en fonction du temps t, non seulement de la concentration PCDD/F en dioxines/furanes (carrés), mais aussi de l'activité à l'égard des oxydes d'azote (ronds) et du phénol (croix).

Dans un premier temps, on calcule un score composite, intégrant l'ensemble des tests en laboratoire. Ce score est le « résultat d'activité ».

| Temps | kNOx | kDiox | SCORE |
|---|---|---|---|
| 0 h | 1.00 | 1.00 | +3.01 |
| 8000 heures | 0.93 | 0.92 | +1.50 |
| 17500 h | 0.86 | 0.81 | -0.32 |
| 21900 h | 0.85 | 0.79 | -0.63 |
| 26200 h | 0.80 | 0.77 | -1.33 |
| 34000 h | 0.72 | 0.76 | -2.24 |

On établit, par régression, la fonction Ψ liant le SCORE aux mesures des émissions de dioxines. A cet effet, on a recalculé par interpolation la valeur de ces mesures, pour les moments auxquels le catalyseur a été évalué en laboratoire.

Dans le présent exemple, on a la relation :
PCDD/F=EXP(-3.3559 -0.2306*SCORE).

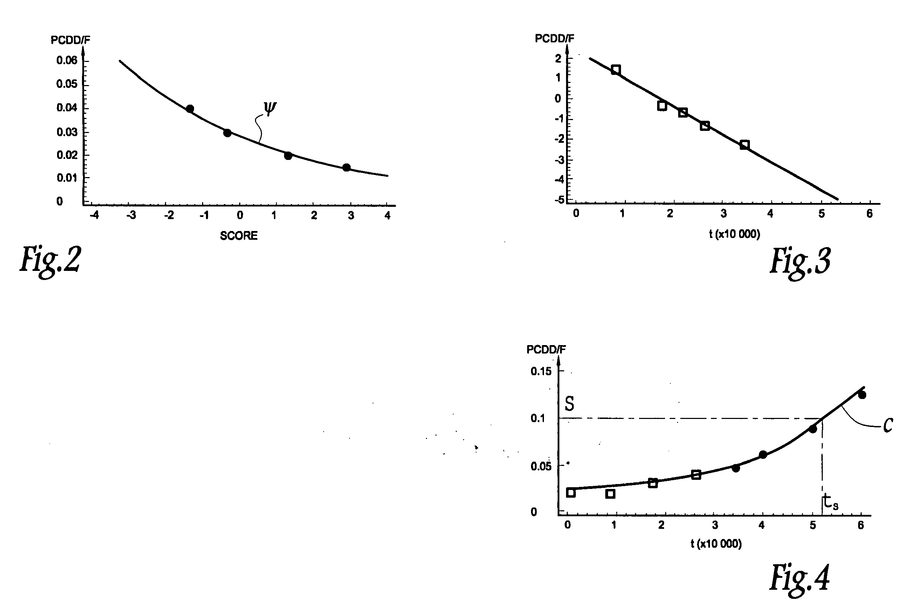

Cette fonction Ψ est illustrée sur la figure 2. On y retrouve les variations de la teneur PCDD/F en dioxines/furanes, en fonction du score.

A partir de l'ensemble des données, on construit par régression une fonction permettant de prédire l'évolution du score composite selon le temps. Dans l'exemple, la figure 3 illustre cette variation du SCORE en fonction du temps t. Dans le cas présent, on obtient par régression linéaire :
SCORE=2.761- 0.000153*t

Enfin, on utilise à nouveau la fonction Ψ liant les dioxines au SCORE (PCDD/F=Ψ(SCORE)) précédemment établie. On trace alors l'évolution la plus probable des émissions de dioxines en fonction du temps. Si nécessaire, des intervalles de confiance peuvent être déterminés.

On obtient le graphe suivant, reproduit à la figure 4, lequel illustre la variation de PCOD/F en fonction du temps. Les carrés correspondent aux valeurs des mesures effectivement réalisées, alors que les ronds correspondent aux valeurs prédites selon l'invention.

On peut tracer la courbe C correspondante, à partir de ces différentes valeurs. On voit donc, dans le cas de l'exemple, qu'on atteindra la limite de 0.1 ng TEQ (valeur seuil S) vers 52000 heures (instant seuil tₛ), si aucun accident particulier ne se manifeste dans la vie du catalyseur.

## Revendications

1. Procédé de prédiction de l'activité d'un catalyseur à l'égard d'un polluant ou groupes de polluants, dénommé cible, dans lequel :
- on effectue au moins trois mesures de la teneur en ledit polluant ou groupe polluants cible, dans des fumées ayant traversé le catalyseur, ces mesures couvrant une période de temps d'au moins douze mois, de préférence d'au moins dix-huit mois;
- on réalise au moins trois tests de l'activité de ce catalyseur à l'égard d'un autre polluant ou groupe de polluants, ces tests couvrant une période d'au moins douze mois, de préférence d'au moins dix-huit mois ;
- on résume ces au moins trois tests par détermination d'un score composite ;
- on détermine une fonction de corrélation (Ψ), liant ce score composite et les résultats desdites au moins trois mesures concernant le polluant ou groupe de polluants cible ;
- on extrapole l'évolution du score composite dans le temps ; et
- on utilise la fonction de corrélation (Ψ) afin de déterminer, à partir de l'extrapolation de l'évolution du score composite, un instant seuil (tₛ), pour lequel la teneur en ledit polluant ou groupe de polluants cible atteint une valeur seuil prédéterminée (S).

2. Procédé de prédiction selon la revendication 1, dans lequel on détermine le score composite à partir du résultat desdits au moins trois tests, en utilisant une analyse factorielle ou une analyse en composantes principales.

3. Procédé de prédiction selon la revendication 1 ou 2, dans lequel on mesure la teneur dans les fumées, en aval du catalyseur, en au moins un composé supplémentaire, différent du polluant ou groupe de polluants cible, et on détermine le score composite à partir également du résultat de la mesure concernant ce ou ces composé(s) supplémentaire(s).

4. Procédé de prédiction selon l'une des revendications précédentes, dans lequel le polluant ou groupe de polluants cible est constitué par les dioxines et furanes.

5. Procédé de prédiction selon l'une des revendications précédentes, dans lequel l'autre polluant ou groupe de polluants appartient aux oxydes d'azote et/ou aux phénols.

6. Procédé de prédiction selon la revendication 3, dans lequel le composé supplémentaire est un composé organique.

7. Procédé d'épuration des fumées, dans lequel on fait circuler ces fumées au travers d'un catalyseur et dans lequel on prédit l'activité de ce catalyseur, à l'égard d'un polluant ou groupe de polluants, selon le procédé conforme à l'une quelconque des revendications précédentes.

## Patentansprüche

1. Verfahren zur Vorhersage der Aktivität eines Katalysators in Bezug auf einen Schadstoff oder auf Schadstoffgruppen, genannt Ziel, bei dem:
- mindestens drei Messungen des Gehalts an dem Zielschadstoff oder der Zielschadstoffgruppe in Rauchgasen, die den Katalysator durchlaufen haben, durchgeführt werden, wobei diese Messungen einen Zeitraum von mindestens zwölf Monaten, vorzugsweise mindestens achtzehn Monaten abdecken;
- mindestens drei Tests der Aktivität dieses Katalysators in Bezug auf einen anderen Schadstoff oder eine andere Gruppe von Schadstoffen realisiert werden, wobei diese Tests einen Zeitraum von mindestens zwölf Monaten, vorzugsweise mindestens achtzehn Monaten abdecken;
- diese mindestens drei Tests durch Bestimmung eines zusammengesetzten Scores zusammengefasst werden;
- eine Korrelationsfunktion (ψ) bestimmt wird, die diesen zusammengesetzten Score und die Ergebnisse der drei Messungen hinsichtlich des Zielschadstoffs oder der Zielschadstoffgruppen verbindet;
- die Entwicklung des zusammengesetzten Scores über die Zeit extrapoliert wird; und
- die Korrelationsfunktion (ψ) verwendet wird, um aus der Extrapolation der Entwicklung des zusammengesetzten Scores einen Schwellenzeitpunkt (tₛ) zu bestimmen, für den der Gehalt an dem Zielschadstoff oder der Zielschadstoffgruppe einen vorbestimmten Schwellenwert (S) erreicht.

2. Verfahren zur Vorhersage nach Anspruch 1, bei dem der zusammengesetzte Score aus dem Ergebnis der mindestens drei Tests bestimmt wird, indem eine Faktorenanalyse oder eine Hauptkomponentenanalyse verwendet wird.

3. Verfahren zur Vorhersage nach Anspruch 1 oder 2, bei dem in den Rauchgasen vor dem Katalysator der Gehalt an mindestens einer zusätzlichen Verbindung, unterschiedlich zum Zielschadstoff oder der Zielschadstoffgruppe gemessen wird und der zusammengesetzte Score auch aus dem Ergebnis der Messung hinsichtlich dieser zusätzlichen Verbindung(en) bestimmt wird.

4. Verfahren zur Vorhersage nach einem der vorhergehenden Ansprüche, bei dem der Zielschadstoff oder die Zielschadstoffgruppe aus Dioxinen und Furanen gebildet wird.

5. Verfahren zur Vorhersage nach einem der vorhergehenden Ansprüche, bei dem der andere Schadstoff oder die andere Schadstoffgruppe zu den Stickoxiden und/oder Phenolen gehört.

6. Verfahren zur Vorhersage nach Anspruch 3, bei dem die zusätzliche Verbindung eine organische Verbindung ist.

7. Verfahren zur Reinigung von Rauchgasen, bei dem diese Rauchgase durch einen Katalysator hindurch geleitet werden und bei dem die Aktivität dieses Katalysators in Bezug auf einen Schadstoff oder eine Schadstoffgruppe gemäß dem Verfahren nach einem beliebigen der vorhergehenden Ansprüche vorausgesagt wird.

## Claims

1. Method for predicting the activity of a catalyst with regard to a pollutant or groups of pollutants, called the target, wherein:
- at least three measurements of the content of said target pollutant or group of pollutants in fumes which have passed through the catalyst are carried out, these measurements covering a period of time of at least twelve months, preferably of at least eighteen months;
- at least three tests of the activity of the catalyst with regard to another pollutant or group of pollutants are performed, these tests covering a period of at least twelve months, preferably of at least eighteen months;
- the at least three tests are summarised by determining a composite score;
- a correlation function (Ψ) linking the composite score and the results of said at least three measurements relating to the target pollutant or group of pollutants is determined;
- the evolution of the composite score is extrapolated over time; and
- the correlation function (Ψ) is used to determine, from the extrapolation of the evolution of the composite score, a threshold time (tₛ) at which the content of said target pollutant or group of pollutants reaches a predetermined threshold value (S).

2. Prediction method according to claim 1, wherein the composite score is determined from the result of said at least three tests using a factor analysis or a principal component analysis.

3. Prediction method according to claim 1 or 2, wherein the content of at least one additional compound, different from the target pollutant or group of pollutants, in the fumes, downstream of the catalyst, is measured, and the composite score is determined likewise from the result of the measurement relating to this or these additional compound(s).

4. Prediction method according to any one of the preceding claims, wherein the target pollutant or group of pollutants is composed of dioxins and furans.

5. Prediction method according to any one of the preceding claims, wherein the other pollutant or group of pollutants belongs to the nitrogen oxides and/or to the phenols.

6. Prediction method according to claim 3, wherein the additional compound is an organic compound.

7. Method for purifying fumes, wherein the fumes are passed through a catalyst and wherein the activity of the catalyst with regard to a pollutant or group of pollutants is predicted by the method according to any one of the preceding claims.
